# EUROPEAN PATENT SPECIFICATION

(11) **EP 1 657 914 B1**
(45) Date of publication and mention of the grant of the patent: **05.12.2007**
(21) Application number: 05024635.4
(22) Date of filing: 11.11.2005
(51) Int. Cl.: H04N 5/232

(54) **Auto-Focus system**
Autofokussystem
Système de focalisation automatique

(30) Priority: 12.11.2004 JP 2004329287; 24.12.2004 JP 2004373458
(43) Date of publication of application: 17.05.2006
(73) Proprietor: Fujinon Corporation, Saitama-shi, Saitama (JP)
(72) Inventor: Sasaki, Tadashi, Kita-ku Saitama-shi Saitama (JP); Ouchi, Shunichiro, Kita-ku Saitama-shi Saitama (JP)
(74) Representative: Klunker . Schmitt-Nilson . Hirsch

(56) References cited:
- EP-A- 1 017 232
- US-A- 6 088 060

## Description

### BACKGROUND OF THE INVENTION

### Field of the Invention

The present invention relates to an auto-focus system, more specifically to an auto-focus system that can change the position, the size, the shape or the like of an AF area, which is an object range of an auto-focusing (AF) in an imaging range of a camera.

### Description of the Related Art

In an imaging system for converting an image of the object into electronic signals (image signals) by a shooting element (CCD) such as a television camera, usually a contrast scheme is adapted as an auto-focus (AF) scheme. The contrast scheme is a scheme for automatically focusing in the best focus condition (focus condition) by detecting a contrast in an object image from image signals of the object image captured by an imaging device and controlling a focus of a taking lens (focus lens) so that it has the highest contrast.

An AF, which is one of the contrast schemes, makes only an object in a part of an imaging range as the object instead of making the entire imaging range of a camera the object range of AF. For example, image signals in a predetermined range, which is an object of AF, is extracted from image signals of the object image effectively imaged by an imaging element, and based on the image signals in the extracted range, focus is controlled so that the image has the highest contrast. In this manner, an object of AF is limited to an object in a part of the range. In this specification, an object range of AF is called "AF area" and a frame indicating a range of the AF area (the outline of the AF area) is called "AF frame".

If a single AF area is fixed to a predetermined position in an imaging range, usually a rectangular AF area is set in the center of the imaging range, however, a technique for enabling an AF area to be changed to a desired position in response to an operator's operation is known (for example, see Japanese Patent Application Laid-Open No. 2003-224759). As a conventional method for indicating the position of an AF area, a method for moving the AF area to an objected position by moving the AF area vertically and horizontally to an imaging range, for example, is known.

It is effective to enable the size or the shape of an AF area to be changed in addition to the position of the AF area, as the size or the shape of the AF area can be adjusted to match the size or the shape within an imaging range for the object to be focused on. The other operating members are needed, however, to enable the size or the shape in addition to the position of the AF area to be changed. Particularly, in order to enable the size or the shape of an AF area to be changed in multiple-steps (continuously), an operating member, such as a turning dial, for enabling an operating position to be changed among multiple continuous positions and a position sensor (volume or the like) for detecting the operating position by volume level or the like are required instead of a simple two-step switch. If sets of the operating member and the position sensor are provided separately for adjusting the size of an AF area and for adjusting the shape of an AF area, spaces for respective purposes are needed. This causes a problem in that an appliance to be provided with such an operating member and a position sensor (a lens body, a controller or the like) is difficult to be downsized.

Even if a position of an AF area is enabled to be changed, the size or the shape (aspect ratio) of the AF area is not appropriate for some sizes or shapes in a range for an object, on which a cameraman or the like wants to focus, or some surrounding situations of an object. This causes a problem in that an object to be focused on sometimes cannot be focused on.

EP 1 017 232 A1 describes that a single rotating sleeve is used for adjusting the size and the shape of an auto focus area. A selection switch is provided to switch between size and shape adjusting function.

### SUMMARY OF THE INVENTION

The present invention is adapted in view of the circumstances, and intends to provide an auto-focus system, which enables a space for an operating member for operating an AF area to be smaller. The present invention also intends to provide an auto-focus system, which enables a range of an AF area to be set so that an intended object is focused on by AF.

In order to achieve the above object, an auto-focus system of a first aspect is provided as set out in claim 1.

According to the present invention, a single operating member is selected to be used as an operating member for changing either the size or the shape of an AF area by a selection device such as a switch so that a single size/shape adjustment operating member can be used for adjusting both the size and the shape of an AF area without needing operating members for adjusting the respective purposes to be provided separately. This reduces a space which should have been needed for placing operating members for adjusting the size and the shape of an AF area to a space for placing a member and downsizes an AF area operating unit for placing the operating member.

The size and the shape of an AF area are not always required to be adjusted when a picture is taken. With a priority subject (which is frequently changed) being selected by the selection device to be changed by a size/shape adjustment operating member, a problem seldom occurs in that the subjects cannot be changed concurrently.

An auto-focus system according to a second aspect is the invention according to the first aspect, wherein the size/shape adjustment operating member can be set to continuous operating positions and the AF area changing device transfers the subject selected by the selection device in a continuous state when an operating position of the size/shape adjustment operating member is continuously changed. In order to enable the size and the shape of an AF area to be continuously changed, the size/shape adjustment operating member must set to continuous operating positions as in the present invention. In this case, a space for placing such operating members needs to be large if such operating members are provided separately for adjusting the size and for adjusting the shape of an AF area. Therefore, it is effective to use a single size/shape adjustment operating member for adjusting both the size and the shape.

An auto-focus system of a third aspect is the invention according to the first or the second aspect, further comprising a position adjustment operating member for changing a position of the AF area, wherein the AF area changing device changes a position of the AF area based on operation to the position changing operating member. The present invention is an aspect which is provided with an operating member for changing a position of an AF area separately.

An auto-focus system of a forth aspect is the invention according to the first, second, or third aspect, wherein the size/shape adjustment operating member is provided on a controller with an operating member for operating a focus or a zoom of the camera or on a driving unit set on the side of a lens barrel of a taking lens. That is to say, if an AF area operating unit placed with the size/shape adjustment operating member is placed on a controller for a focus or a zoom or on a driving unit, the controller or the driving unit can be smaller.

An auto-focus system of a fifth aspect is the invention according to the first to fourth aspect further comprising an aspect ratio inputting device for indicating and inputting an aspect ratio of the AF area; and an aspect ratio changing device for changing an aspect ratio of the AF area to the aspect ratio inputted by the aspect ratio inputting device. According to the present invention, as an AF area can be changed to have a desired aspect ratio, an appropriate range can be set as an AF area based on the shape of the object to be focused on. This improves reliability of focusing on the desired object.

An auto-focus system of a sixth aspect is the invention according to the fifth aspect, wherein the aspect ratio changing device changes an aspect ratio of the AF area while keeping the area of the AF area to a certain value by changing the vertical length and the horizontal length of the AF area. According to the present invention, the vertical length and the horizontal length are changed with the area of the AF area being kept as it is. If the size of the AF area, which can be defined by an area of the AF area, is appropriate, any change to the aspect ratio of the AF area does not cause a problem in that the size of the AF area is inappropriate. Changing such as exchanging the vertical length and the horizontal length of the AF area can be easily performed.

An auto-focus system of a seventh aspect is the invention according to the fifth aspect, wherein the aspect ratio changing device changes an aspect ratio of the AF area by changing either the vertical length or the horizontal length of the AF area. Unlike the invention according to the second aspect, the invention can change an aspect ratio of an AF area also by changing either the vertical length or the horizontal length of the AF area without keeping the area of the AF area to a certain value as in the invention of the third aspect.

An auto-focus system of a eight aspect is the invention according to the fifth aspect, wherein the aspect ratio inputting device comprises: a first inputting device for indicating and inputting an aspect ratio of the AF area when only the vertical length is changed while the horizontal length of the AF area being kept to a certain value; and a second inputting device for indicating and inputting an aspect ratio of the AF area when only the horizontal length is changed while the vertical length of the AF area being kept to a certain value; and wherein the aspect ratio changing device changes the vertical length of the AF area to the aspect ratio indicated and inputted by the first inputting device and changes the horizontal length of the AF area to the aspect ratio indicated and inputted by the second inputting device. In the present invention, an aspect ratio can be changed by changing either the vertical length or the horizontal length of the AF area and the size (area) of the AF area can be adjusted by adjusting the vertical length and the horizontal length.

An auto-focus system of a ninth aspect is the invention according to any one of the aspects from the fifth aspect to the eighth aspect, wherein the aspect ratio changing device changes an aspect ratio of the AF area without changing the center position of the AF area. According to the present invention, as the center position of the AF area does not change even if an aspect ratio of the AF area is changed, the problem in that a position of the AF area is inappropriate does not occur even if an aspect ratio of the AF area is changed when the position of the AF area is appropriate.

An auto-focus system of a tenth aspect is the invention according to any one of the aspects from the fifth aspect to the ninth aspect, wherein the aspect ratio changing device changes an aspect ratio of the AF area without changing the center position of the AF area, if an entire range of the AF area is contained in the imaging range of the camera, and changes an aspect ratio of the AF area by changing the center position of the AF area so that the entire range of the AF area is contained in the imaging range of the camera, if the entire range of the AF area is not contained in the imaging range of the camera. According to the present invention, a part of an AF area may stick out from the edge of the imaging range when an aspect ratio of the AF area is changed without changing the center position of the AF area. As an aspect of an action taken for the case, the present invention is an aspect for changing the center position of the AF area so that the entire AF area is contained in the imaging range.

An auto-focus system of a eleventh aspect is the invention according to any one of the aspects from the fifth aspect to the tenth aspect, further comprising: a size inputting device for indicating and inputting the size of the AF area; and a size changing device for changing the size of the AF area to the size inputted by the size inputting device while keeping the aspect ratio of the AF area as it is. The present invention is for enabling a cameraman or the like to change the aspect ratio of an AF area and the size, i.e., the area of the AF area.

An auto-focus system of a twelfth aspect is the invention according to any one of the aspects from the fifth aspect to the eleventh aspect, further comprising: a position inputting device for indicating and inputting a position of the AF area; and a position changing device for changing a position of the AF area to the position inputted by the position inputting device. The present invention is for enabling a cameraman or the like to change an aspect ratio of an AF area and a position of the AF area.

An auto-focus system according to the present invention enables a space for placing operating members for operating an AF area to be smaller. A cameraman or the like can correctly set a range of an AF area to focus on an object, on which the cameraman or the like wants to focus, so that an object intended by the cameraman or the like can be focused on the object. This broadens the range of AF applications.

### BRIEF DESCRIPTION OF THE DRAWINGS

Fig. 1 is an outline view showing an embodiment of a television camera system applying the present invention;
Fig. 2 is a block diagram showing a configuration of an auto-focus system;
Fig. 3 is a diagram exemplifying a range of an AF area in an imaging range;
Fig. 4 is a plane view showing a front of a focus demand with an AF area operating unit shown from a viewpoint of a standing cameraman;
Fig. 5 is a schematic diagram showing a case where a position of an AF area is moved vertically and horizontally in the imaging range;
Fig. 6 is schematic diagram showing a case where the size of an AF area becomes bigger/smaller in the imaging range;
Fig. 7 is a schematic diagram showing a case where the shape of an AF area is changed in the imaging range;
Fig. 8 is an outline view of a driving unit of an ENG lens provided with an AF area operating unit;
Fig. 9 is a block diagram showing a configuration of another embodiment of an auto-focus system according to the present invention;
Fig. 10 is a diagram exemplifying a range of an AF area in an imaging range;
Fig. 11 is a plane view showing an outline of an AF area operating unit;
Fig. 12 is a schematic diagram used for explanation of changing the position of the AF area;
Fig. 13 is a schematic diagram used for explanation of changing the size (area) of the AF area;
Fig. 14 is a schematic diagram used for explanation of changing the shape (aspect ratio) of the AF area;
Fig. 15 is a schematic diagram used for explanation of changing the shape (aspect ratio) of the AF area; and
Fig. 16 is a schematic diagram used for explanation of a certain situation in changing the shape (aspect ratio) of the AF area.

### DETAILED DESCRIPTION OF THE PREFERRED EMBODIMENTS

Preferred embodiments of an auto-focus system according to the present invention will be described with reference to the attached diagrams.

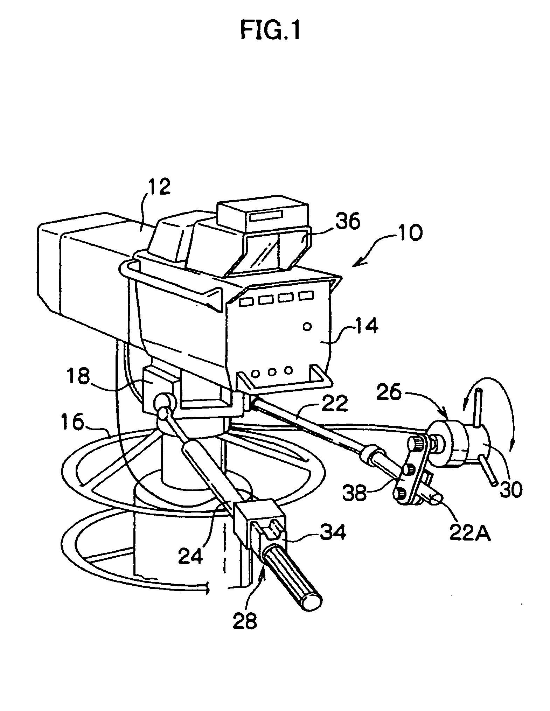

Fig. 1 is an outline view showing an embodiment of a television camera system applying the present invention. As shown in Fig. 1, a television camera 10 includes a lens unit 12 and a camera body 14 and is supported on a camera platform 18 set on a pedestal dolly 16.

Two operation rods for left and right 22 and 24 are extending from the camera platform 18, with a focus demand (focus controller) 26 being set by a mounting clamp 38 on a grip part 22A of the right operation rod 22 and a zoom demand (zoom controller) 28 being set on a grip part of the left operation rod 24. The focus demand 26 and the zoom demand 28 are connected with a predetermined connector on the lens unit 12 via cables.

Focus knobs 30 that can be tuned are provided on the focus demand 26. When the focus knobs 30 are turned, a focus control signal, which indicates to move a focus (focus lens) to a target position of the focus position according to the turned position, is provided from the focus demand 26 to the lens unit 12. In response to the signal, the focus lens of the lens unit 12 moves to the target position indicated by the focus control signal.

As detailed later, the focus demand 26 has an integrated AF area operating unit including operating members such as an AF start switch for indicating to start auto-focus (AF), and joy sticks for operating the position, the size and the shape of an AF area, which is an object range of AF.

The zoom demand 28 has a thumb ring 34 that can be tuned. When the thumb ring 34 is turned around the zoom demand 28, a zoom control signal, which indicates to move a zoom (zoom lens) in a target speed of the zoom speed according to the turned position, is provided from the zoom demand 28 to the lens unit 12. In response to the signal, the zoom lens of the lens unit 12 moves in the target speed indicated by the zoom control signal.

On the camera body 14, a viewfinder 36, which is a display device, is provided. As the viewfinder 36 displays an image of an object taken by the camera 10, the cameraman can shoot the object with a desired composition by operating the focus demand 26 and the zoom demand 28 as viewing the image. A range of an AF area, which is an object range of auto-focus (AF), can be shown by an AF frame, which indicates an outline of the range, and the AF frame is displayed as superimposed on the image of an object on a screen of the viewfinder 36. Therefore, when AF is performed, the cameraman can recognize which range the object can be focused on in a shooting range (imaging range) and adjust the AF area to a desired range by operating the AF area operating unit placed on the focus demand 26.

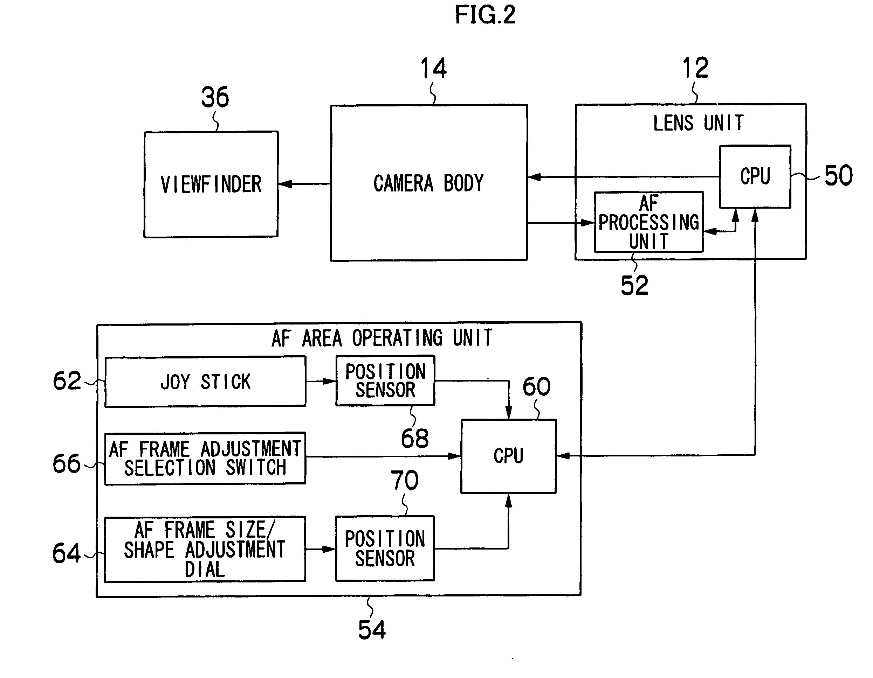

Fig. 2 is a block diagram showing a configuration of an auto-focus system applied to the abovementioned television camera system. The auto-focus system shown in Fig. 2 includes the lens unit 12, a camera body 14, a viewfinder 36, and an AF area operating unit 54 integrated in the focus demand 26.

The lens unit 12 includes a CPU 50 and AF processing unit 52. The lens unit 12 has an optical system (taking lens) (not shown) for imaging an object light on an imaging surface of the imaging element of the camera body 14. The optical system has a group of lenses, which is movable in the direction of an optical axis of a focus lens, a zoom lens or the like and a group of fixed lenses. The group of movable lenses is driven by motor (not shown) according to control signals from the CPU 50. The CPU 50 controls the position or the speed of the focus lens or the zoom lens.

The focus lens is controlled (focus control) by manual focus (MF) or auto focus (AF). When it is controlled by MF, focus control signals outputted from the focus demand 26 shown in Fig. 1 in response to operation of the focus knobs 30 are obtained by the CPU 50 and the focus lens is controlled to move to the target position indicated by the focus control signals.

When it is controlled by AF, focus information (focus evaluation value) detected by the AF processing unit 52 is provided for the CPU 50 and the focus lens is controlled according to the focus information. Image signals of the image taken by the imaging element are generated in the camera body 14 and the image signals (brightness signals) are provided from the camera body 14 to the AF processing unit 52. The AF processing unit 52 detects a contrast in the object image based on the image signals.

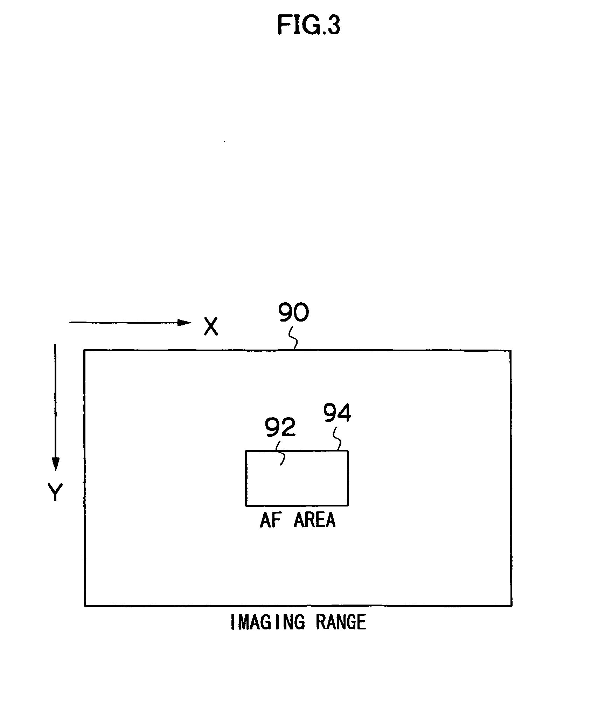

Assuming that an object or a range of an object image, which is effectively imaged by the imaging element of the camera body 12, is called "imaging range", an AF area 92, which is an object range of AF, is set in a rectangular range of an AF frame 94 for the imaging range 90, for example, as shown in Fig. 3. The position, the size and the shape in the AF area 92 (AF frame 94) in the imaging range 90 are changed according to AF area information provided from the AF area operating unit 54 as described later. The imaging range 90 shown in Fig. 3 corresponds to an imaging range of the television camera 10 as well as to a screen range of an object image taken by the imaging element of the camera body 14 (image) when the image is displayed on a screen of the viewfinder 36 or the like.

In Fig. 2, image signals provided from the camera body 14 to the AF processing unit 52 include image information on the entire of the abovementioned imaging range. The AF processing unit 52 extracts only the image signals in the range of the AF area from the image signals and adds up high frequency components of the image signals for each field (for each screen). This sequentially gives values indicating contrasts of an object image in an AF area. The value (added up value) is called "focus evaluation value" in this specification.

The CPU 50 sequentially obtains the focus evaluation values as focus information from the AF processing unit 52 and moves the focus lens to the position where the focus evaluation value is the biggest (maximum). This enables an object in the AF area is automatically focused on.

Image signals obtained by the imaging element of the camera body 14 are provided from the camera body 14 for the viewfinder 36, whose screen is adapted to display the currently taken image. The CPU 50 of the lens unit 12 is adapted to provide AF area information (information on the position, the size and the shape of the AF area) for the camera body 14, indicating a range of the abovementioned AF area, which is currently set as an object range of AF. Signals of the AF frame (an outline of the AF area) indicating the range of the current AF area is combined with the abovementioned image signals to be outputted to the viewfinder 36, based on the AF area information in the camera body 14, and an image of an AF frame 94 indicating a range of the current AF area 92 is displayed on the screen of the viewfinder 36 with the image of the imaging range 90, as shown in Fig. 3. With this display, the cameraman can recognize the range of the current AF area.

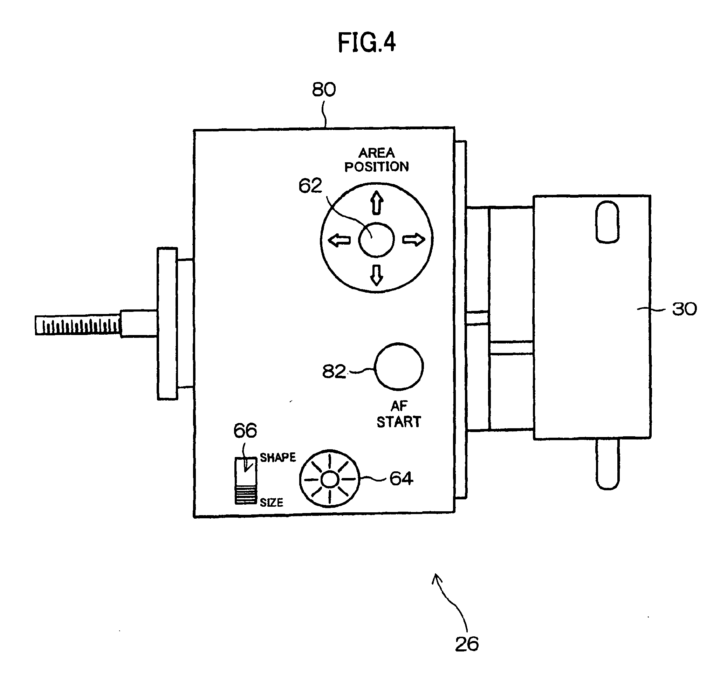

The AF area operating unit 54 is an operating unit for setting and changing the position, the size and the shape of an AF area, and integrated in the focus demand 26. Fig. 4 is a plane view showing an appearance of the focus demand 26. As shown in Fig. 4, the focus demand 26 includes a body unit 80 on a cylinder with integrated various circuits. The body unit 80 has the abovementioned focus knob 30 that can be turned for indicating a target position to move a focus lens in the MF mode. On the circumference of the body unit 80, an AF start switch is placed and a joy stick 62, an AF frame size/shape adjustment dial 64 and an AF frame adjustment selection switch 66 are arranged as operating members of the AF area operating unit 54.

The AF start switch 82 is a switch for starting AF. When the AF start switch 82 is turned on in the MF mode, the signal is provided for the CPU 50 of the lens unit 12 and the AF process is started in the CPU 50. AF is switched to MF in response to turning of the focus knob 30.

The joy stick 62, which is placed as an operating member of the AF operating unit 54, is a directional member for adjusting a position of the AF area (AF frame). When the joy stick 62 is tilted up or down or to the left or to the right, the position of the AF frame moves up or down or to the left or to the right on the screen (on the imaging range) as described later.

The AF frame size/shape adjustment dial 64 is an operating member used for adjusting both the size and the shape of the AF area (AF frame). When the AF frame size/shape adjustment dial 64 is turned, the size or the shape of the AF area is changed, while the center of the AF area is fixed as described later.

The AF frame adjustment selection switch 66 is a two-step slide switch for selecting either to use the AF frame size/shape adjustment dial 64 as an operating member for adjusting the size of an AF area (AF frame) or to use it as an operating member for adjusting the shape of the AF frame. When the AF frame adjustment selection switch 66 is set to the down side in Fig. 4, the size of the AF area can be adjusted in response to the operation of the AF frame size/shape adjustment dial 64. When the AF frame adjustment selection switch 66 is set to the up side in Fig. 4, the shape of the AF area can be adjusted.

A CPU for performing each type of process in response to operation of each operating member is mounted on the body unit 80 of the focus demand 26. The CPU performs process in response to operation of the focus knob 30 or operation of the AF start switch 82, as well as process as the AF area operating unit 54. In Fig. 2, the CPU of the focus demand 26 is shown as the CPU 60 of the AF area operating unit 54.

In Fig. 2, the CPU 60 sends AF area information indicating the position, the size and the shape of the AF area (AF frame) to the CPU 50 of the lens unit 12. The position, the size and the shape of the AF area in the AF processing unit 52 of the lens unit 12 or in the viewfinder 36 is set based on the AF area information. The CPU 60 changes the position, the size and the shape of the AF area in the AF processing unit 52 or the viewfinder 36 as described later by changing the position, the size and the shape of the AF area indicated by the AF area information, based on operation of the abovementioned joy stick 62 or the AF frame size/shape adjustment dial 64 and a selected position of the AF frame adjustment selection switch 66.

As shown in Fig. 2, the abovementioned joy stick 62 is attached with a position sensor 68, which detects operation to the joy stick 62. For example, signals (voltage values) indicating an angle the joy stick 62 tilts up or down and an angle the joy stick 62 tilts to the left or to the right in response to operation of tilting it up or down or to the left or to the right with the reference of the standing position taken by the joy stick 62 when it is not operated is outputted from the position sensor 68 and provided for the CPU 60.

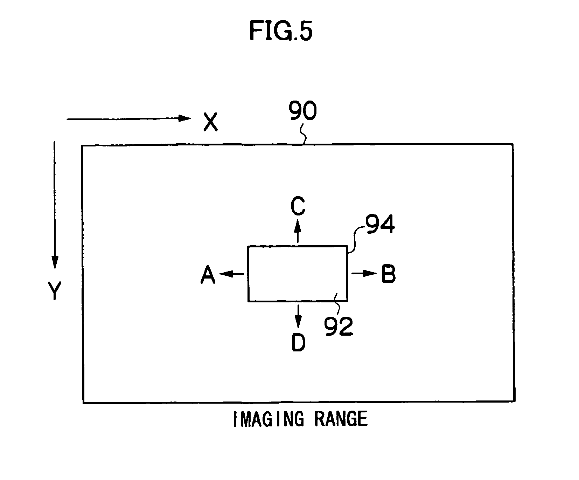

The CPU 60 reads the operating direction of the joy stick 62 based on the signals from the position sensor 68. Based on the operating direction, the CPU 60 moves the position of the AF area 92 (AF frame 94) in the AF processing unit 52 of the lens unit 12 or in the viewfinder 36 up or down or to the left or to the right in the imaging range 90 as shown in Fig. 5.

When the joy stick 62 is tilted to the left as one faces to the joy stick 62, the position of the AF area 92 (AF frame 94) moves to the left as an arrow A shows by a certain amount in the imaging range 60 shown in Fig. 5. Similarly, when the joy stick 62 is tilted to the right, up or down, the position of the AF area 92 moves in the operating direction, such as to the right as an arrow B shows, up as an arrow C shows or down as an arrow D shows, by a certain amount.

The CPU 60 continuously transfers the position of the AF area 92 by moving the position of the AF area 92 in the same direction as the operating direction by a certain amount for each time period when the joy stick 62 is tilted in a certain direction. The AF area 92 may move in the higher speed according to the amount of operation (tilted angle) of the joy stick 62.

As shown in Fig. 2, the abovementioned AF frame size/shape adjustment dial 64 is attached with a position sensor 70, which detects operation to the AF frame size/shape adjustment dial 64. For example, a signal of a value corresponding to a turned position, to which the AF frame size/shape adjustment dial 64 is set by turning operation with the reference of the certain turned position is outputted from the position sensor 70 and provided for the CPU 60.

The CPU 60 reads the turned position of the AF frame size/shape adjustment dial 64 based on the signal from the position sensor 70. The CPU 60 detects which of the two selectable positions shown in Fig. 4 the AF frame adjustment selection switch 66 is set to.

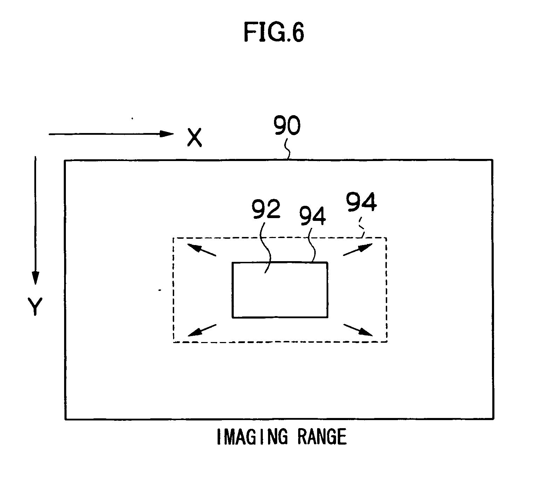

When the AF frame adjustment selection switch 66 is set to the position for selecting the size adjustment (adjustment of the size) (the lower position in Fig. 4), the CPU 60 makes the size of the AF area 92 (AF frame 94) bigger or smaller in the AF processing unit 52 in the lens unit 12 or on the viewfinder 36 as shown in Fig. 6 based on the turned position of the AF frame size/shape adjustment dial 64.

When a value indicating the turned position of the AF frame size/shape adjustment dial 64 is operated in the direction where the value is bigger than the current value, the CPU 60 makes the AF frame 94 shown by a solid line corresponding to the current value shown in Fig. 6 bigger while keeping the center position and the aspect ratio of the AF area 92 as they are, as the AF frame 94 shown by a dotted line. When a value indicating the turned position of the AF frame size/shape adjustment dial 64 is operated in the direction where the value is smaller than the current value, the CPU 60 makes the AF frame 94 smaller while keeping the center position and the aspect ratio as they are. The turned positions of the AF frame size/shape adjustment dial 64 are indicated by the continuous values and the size of the AF frame 94 is continuously transferred according to increasing or decreasing of the value.

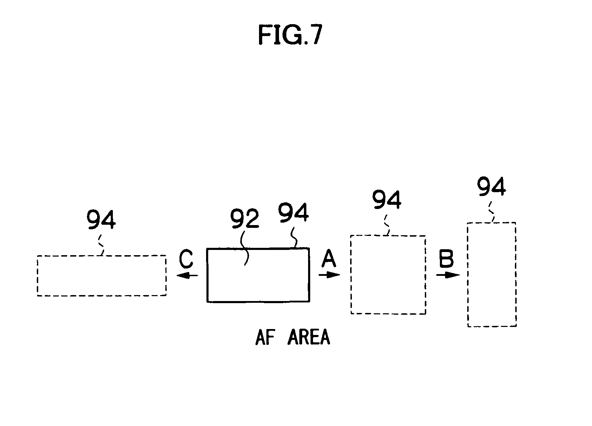

When the AF frame adjustment selection switch 66 is set to the position for selecting the shape adjustment (the upper position in Fig. 4), the CPU 60 changes the shape of the AF area 92 (AF frame 94) in the AF processing unit 52 of the lens unit 12 or in the viewfinder 36 as shown in Fig. 7 based on the turned position of the AF frame size/shape adjustment dial 64.

When a value indicating the turned position of the AF frame size/shape adjustment dial 64 is operated in the direction where the value is bigger than the current value, the CPU 60 changes the shape of the AF area 92 so that the vertical width (width in the direction of Y) of the AF frame 94 shown by a solid line corresponding to the current value shown in Fig. 7 is longer (so that the horizontal width is shorter) like the AF frames 94 shown by dotted lines indicated by arrows A and B, while keeping the center position and the area of the AF area 92 as they are. When a value indicating the turned position of the AF frame size/shape adjustment dial 64 is operated in the direction where the value is smaller than the current value, the CPU 60 changes the shape of the AF area 92 so that the horizontal width (width in the direction of X) of the AF area 92 is longer (so that the vertical width is shorter) like the AF frame 94 shown by a dotted line indicated by an arrow C, while keeping the center position and the area of the AF area 92 as they are. The shape of the AF frame 94 is also continuously transferred according to continuous increasing or decreasing of the value of the AF frame size/shape adjustment dial 64.

When the position sensor 70 detects the absolute position as detection of a turned position of the AF frame size/shape adjustment dial 64, the size or the shape of the AF area 92 is set according to the absolute position. By switching between the size adjustment and the shape adjustment by the AF frame adjustment selection switch 66 in this case, the size or the shape of the AF area 92 changes according to the turned position of the AF frame size/shape adjustment dial 64. The AF area 92 can be adjusted to a desired size and shape even in this case, however, when the size adjustment and the shape adjustment are switched by the AF frame adjustment switch 66, the CPU 60 can be adapted not to change the size and the shape of the AF area 92. For example, the CPU 60 detects deviation of the turned position of the AF frame size/shape adjustment dial 64 from a reference position, which is the position of the AF frame size/shape adjustment dial 64 turned when the size adjustment and the shape adjustment are switched, and changes the size or the shape of the AF area 92 by the deviation. Accordingly, neither the size nor the shape of the AF area 92 changes unless the turned position of the AF frame size/shape adjustment dial 64 is changed after the size adjustment and the shape adjustment are switched. The size or the shape of the AF frame can be changed by operating amount (deviation of the turned position) of the AF frame size/shape adjustment dial 64 after the switching.

With the process of the AF area operating unit 54, the AF area 92 (AF frame) can be adjusted to a desired position, size or shape. The AF processing unit 52 focuses on the object in the AF area 92 and a range of the AF area 92 is displayed on the viewfinder 36. As a single AF frame size/shape adjustment dial 64 is used as an operating member for adjusting both the size and the shape of the AF area 92, a space for placing operating members relating to operation of the AF area can be reduced.

In the abovementioned embodiment, the case where the AF area operating unit 54 is placed in the focus demand 26 has been described, however, the AF area operating unit 54 may be adapted by a controller dedicated for the purpose or placed in the zoom demand 28. The AF area operating unit 54 may also be placed at a desired position such as in a lens unit 12 or in a camera body 14.

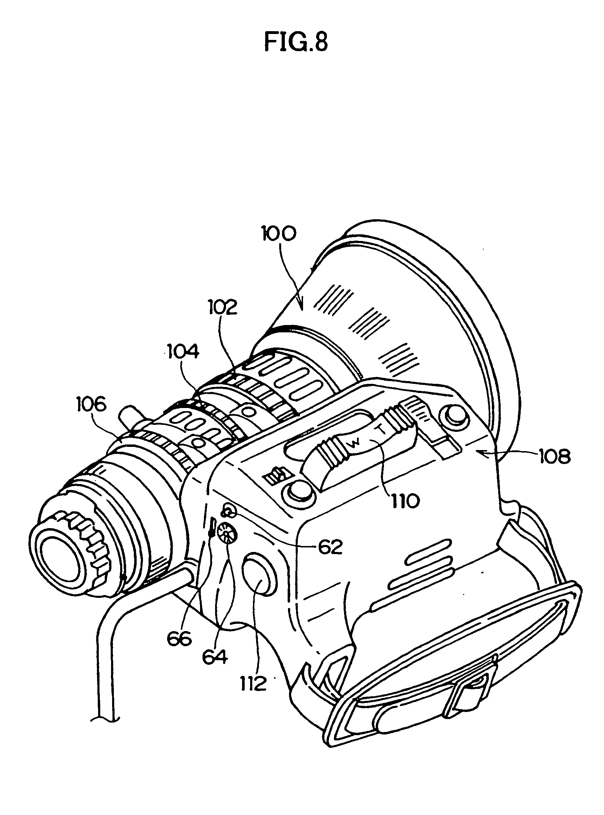

When the lens unit 12 is a portable, so-called ENG lens, as shown in Fig. 8, the lens barrel 100 has operation rings 102, 104 and 106 for adjusting focus, zoom and iris. On the side of the lens barrel 100, a driving unit 108 for driving the operation rings 102, 104 and 106 by motor is attached. On the case of the driving unit 108, various operating members including a zoon seesaw switch 110 for operating a zoom and a VTR switch 112 are placed. The AF area operating unit 54 in the abovementioned embodiment may be placed in the driving unit 108 and may have the joy stick 62, the size/shape adjustment dial 64 and the AF frame adjustment selection switch 66 the same as those in Fig. 4 on the backside of the case of the driving unit 108 as shown in Fig. 8.

In the abovementioned embodiment, the case where the joy stick 62 is used as a directional member for indicating the direction in which the AF area moves has been described, however, the directional member is not limited to the joy stick. Any operating member may be applied to the directional member if only it can indicate a direction such as a trackball, a cross key, or four switch members arranged in places indicating up, down, left and right.

In the abovementioned embodiment, both the size and the shape of the AF area can be adjusted by a single operating member, however, the invention can be adapted to adjust all of the position, the size and the shape of the AF area by a single operating member. For example, the invention can be adapted to have the joy stick 62 shown in Fig. 4 and a selection switch for selecting a desired adjustment from the position adjustment, the size adjustment, and the shape adjustment of the AF area so that the joy stick 62 can be used for performing the adjustment selected by the selection switch.

The present invention can be applied to an AF of the scheme other than the contrast scheme like the abovementioned embodiment.

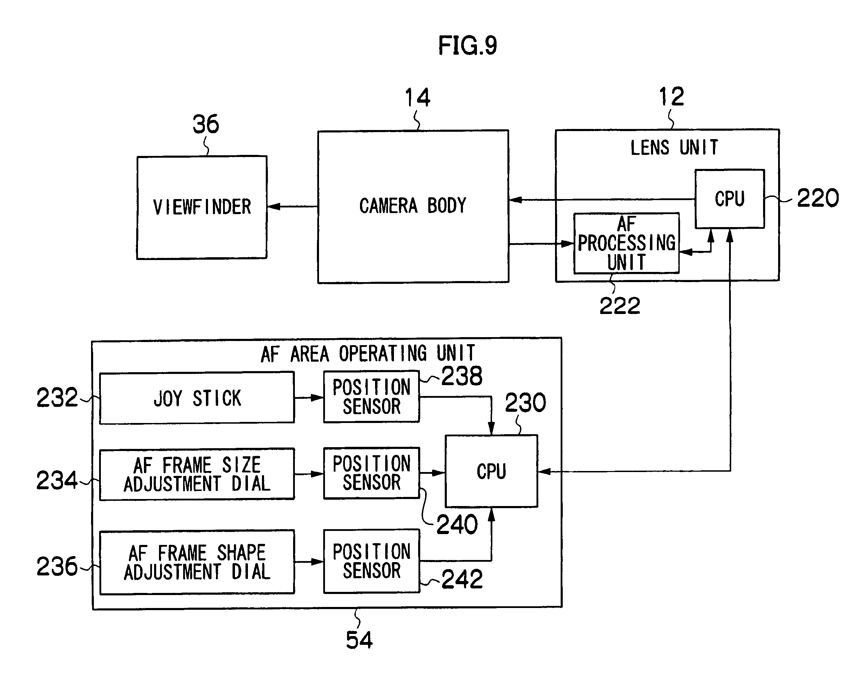

Now, another embodiment of an auto-focus system according to the present invention will be described. Fig. 9 is a block diagram showing a configuration of an auto-focus system of an embodiment applied to the television camera system shown in Fig. 1. The auto-focus system shown in Fig. 9 includes a lens unit 12, a camera body (camera head) 14, a viewfinder 36 and an AF area operating unit 54.

The lens unit 12 has a built-in CPU 220 and a built-in AF processing unit 222. The lens unit 12 also has an optical system (taking lens) (not shown) for forming an image of an object light on an imaging surface of an imaging element of the camera body 14. The optical system has a group of movable lenses, which is held in a lens barrel and can move to and fro along an optical axis, such as a focus lens for adjusting a focus or a zoom lens for adjusting a zoom, and a group of lenses fixed in the lens barrel. The group of movable lenses is driven by a motor (not shown) according to a control signal from the CPU 220. The CPU 220 controls the position or the speed of the focus lens or the zoom lens.

The focus lens is controlled (focus control) by manual focus (MF) or auto focus (AF). When it is controlled by MF, a focus demand (controller) (not shown) connected with the lens unit 12 via a cable or the like, for example, is used. The focus demand has a manual operating member (focus knob) for a cameraman to focus, and a focus control signal outputted from the focus demand according to the operation are provided for the CPU 220 of the lens unit 12. Then, the focus lens is controlled to move to the target position indicated by the focus control signal.

When it is controlled by AF, focus information (focus evaluation value) detected by an AF processing unit 222 is provided for the CPU 220 and the focus lens is controlled according to the focus information. In the camera body 14, an image signal of the image taken by the imaging element is generated and the image signal (a brightness signal) is provided from the camera body 14 to the AF processing unit 222. The AF processing unit 222 detects a contrast in the object image based on the image signal.

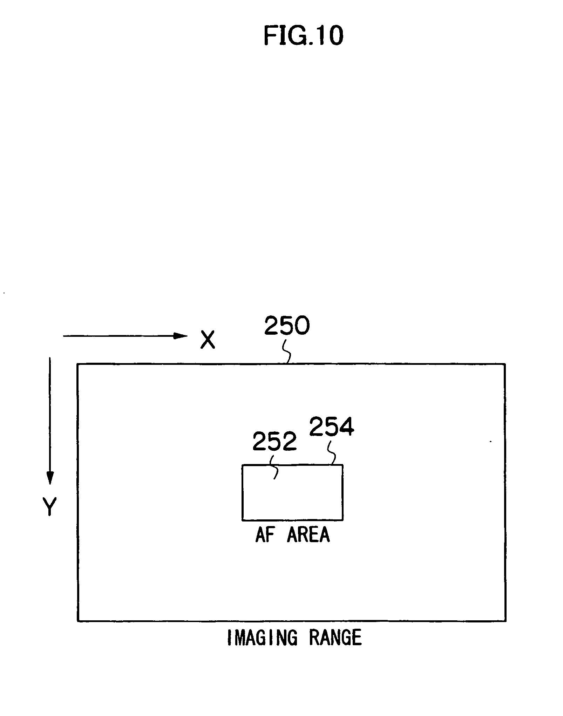

Assuming that an object or a range of an object image, which is effectively imaged by the imaging element of the camera body 14, is called "imaging range", an AF area 252, which is an object range of AF, is set in a rectangular range of an AF frame 254 for the imaging range 250, for example, as shown in Fig. 10. The position, the size (area) and the shape (aspect ratio) of the AF area 252 (AF frame 254) in the imaging range 250 are changed according to AF area information provided from the AF area operating unit 54 as described later. The imaging range 250 shown in Fig. 10 corresponds to an imaging range of a television camera as well as to a screen range of an object image taken by the imaging element of the camera body 14 when the image is displayed on a screen of the viewfinder 36 or the like.

In Fig. 9, image signals provided from the camera body 14 to the AF processing unit 222 include image information on the entire of the abovementioned imaging range. The AF processing unit 222 extracts only the image signals in the range of the AF area from the image signals and adds up high frequency components of the image signals for each field (for each screen). This sequentially gives values indicating contrasts of an object image in an AF area. The value (added up value) is called "focus evaluation value" in this specification.

The CPU 220 sequentially obtains the focus evaluation values as focus information from the AF processing unit 222 and moves the focus lens to the position where the focus evaluation value is the biggest (maximum). This enables an object in the AF area is automatically focused on.

Image signals obtained by the imaging element of the camera body 14 are provided from the camera body 14 for the viewfinder 36, whose screen is adapted to display the currently taken image. The CPU 220 of the lens unit 12 is adapted to provide AF area information (information on the position, the size and the shape of the AF area) for the camera body 14, indicating a range of the abovementioned AF area, which is currently set as an object range of AF. Signals of the AF frame (an outline of the AF area) indicating the range of the current AF area is combined with the abovementioned image signals to be outputted to the viewfinder 36, based on the AF area information in the camera body 14, and an image of an AF frame 254 indicating a range of the current AF area 252 is displayed on the screen of the viewfinder 36 with the image of the entire imaging range 250, as shown in Fig. 10. With this display, the cameraman can recognize the range of the current AF area.

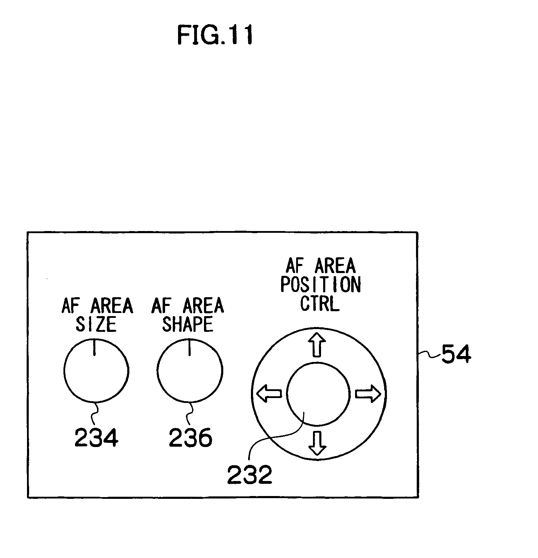

The AF area operating unit 54 is an operating unit for setting and changing the position, the size and the shape of an AF area, and connected with the lens unit 12 via a cable or the like. The AF area operating unit 54 can be integrated in a unit for another purpose such as a focus demand. Fig. 11 is a plane view showing an outline of an AF area operating unit. As shown in Fig. 11, on the AF area operating unit 54, a joy stick 232, an AF frame size adjustment dial 234 and an AF frame shape adjustment dial 236 are placed.

The joy stick 232 is a directional member for adjusting the position of an AF area (AF frame). When the joy stick 232 is tilted up or down, or to the left or to the right, the position (center position) of the AF area moves up or down or to the left or to the right on the screen (on the imaging range) with the size and the shape of the AF area kept as they are, as described later.

The AF frame size/shape adjustment dial 234 is an operating member for adjusting the size, i.e., the area of the AF area (AF frame). When the AF frame size adjustment dial is turned, the size (the area) of the AF area is changed, while the center position and the shape of the AF area are not changed as described later.

The AF frame shape adjustment dial 236 is an operating member for adjusting the shape of an AF area (AF frame), i.e., a ratio (aspect ratio) of the vertical length (vertical width) and the horizontal length (horizontal width) of a rectangular AF area. When the AF frame shape adjustment dial 236 is turned, the aspect ratio of the AF area is changed, while the center position and the area of the AF area are not changed as described later.

As shown in Fig. 9, the AF area operating unit 54 has a CPU 230 mounted on it. The CPU 230 sends AF area information indicating the position, the size (the area) and the shape (the aspect ratio) of the AF area to the CPU 220 of the lens unit 12. The position, the size, and the shape of the AF area in the AF processing unit 222 of the lens unit 12 or on the viewfinder 36 are set according to the AF area information. The CPU 230 changes the position, the size and the shape of the AF area in the AF processing unit 222 or on the viewfinder 36 as described below by changing the position, the size and the shape of the AF area indicated by the AF area information according to operation to the abovementioned joy stick 232, AF frame size adjustment dial 234 and AF frame shape adjustment dial 236.

The abovementioned joy stick 232 is attached with a position sensor 238, which detects operation to the joy stick 232. For example, signals (voltage values) indicating an angle the joy stick 232 tilts up or down and an angle the joy stick 232 tilts to the left or to the right in response to operation of tilting it up or down or to the left or to the right with the reference of the standing position taken by the joy stick 232 when it is not operated is outputted from the position sensor 238 and provided for the CPU 230.

The CPU 230 reads the operating direction of the joy stick 232 based on the signals from the position sensor 238. Based on the operating direction, the CPU 230 moves the position of the AF area 252 (AF frame 254) in the AF processing unit 222 of the lens unit 12 or on the viewfinder 36 up or down (in the direction of Y) or to the left or to the right (in the direction of X) in the imaging range 250. When the position of the AF area is changed, the size (area) and the shape (aspect ratio) of the AF area are kept to certain values.

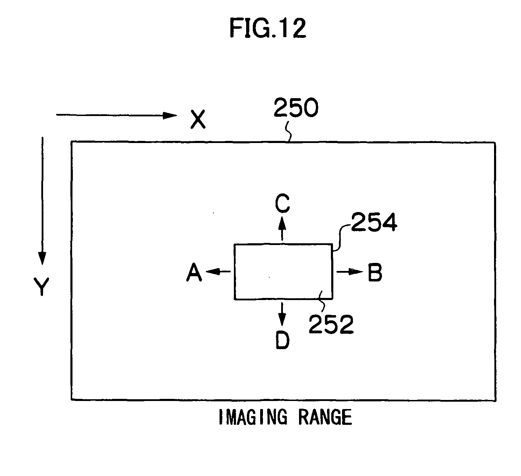

When the joy stick 232 is tilted to the left as one faces to the joy stick 232, the position of the AF area 252 (AF frame 254) moves to the left as an arrow A shows by a certain amount in the imaging range 250 shown in Fig. 12. Similarly, when the joy stick 232 is tilted to the right, up or down, the position of the AF area 252 moves in the operating direction, such as to the right as an arrow B shows, up as an arrow C shows or down as an arrow D shows, by a certain amount.

The CPU 230 continuously transfers the position of the AF area 252 by moving the position of the AF area 252 in the same direction as the operating direction by a certain amount for each time period when the joy stick 232 is tilted in a certain direction. The AF area 252 may be moved in the higher speed according to the amount of operation (tilted angle) of the joy stick 232.

As shown in Fig. 9, the abovementioned AF frame size adjustment dial 234 is attached with a position sensor 240, which detects operation to the AF frame size adjustment dial 234. For example, a signal of a value corresponding to a turned position, to which the AF frame size adjustment dial 234 is set by turning operation with the reference of the predetermined turned position is outputted from the position sensor 240 and provided for the CPU 230.

The CPU 230 reads the turned position of the AF frame size adjustment dial 234 based on the signal from the position sensor 240. Then, the CPU 230 makes the size, i.e., the area of the AF area in the AF processing unit 222 of the lens unit 12 or on the viewfinder 36 bigger or smaller based on the turned position of the AF frame size adjustment dial 234. When the size of the AF area is changed, the position (center position) and the shape (aspect ratio) of the AF area are kept to certain values.

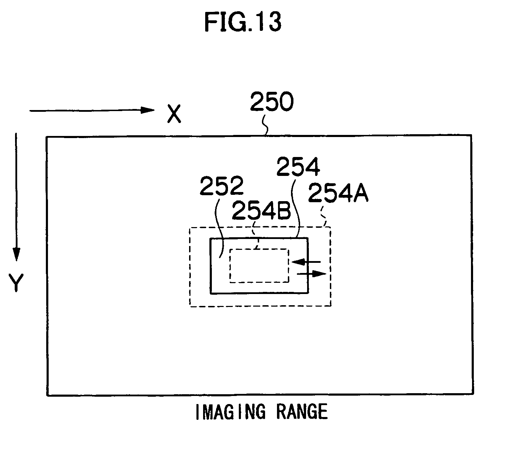

When a value indicating the turned position of the AF frame size adjustment dial 234 is operated in the direction where the value is bigger than the current value, the CPU 230 makes the area of the AF area bigger while keeping the center position and the aspect ratio of the AF area as they are. In this manner, the AF frame 254 shown by a solid line corresponding to the current value is expanded to the AF frame 254A shown by a dotted line in the imaging range 250 shown in Fig. 13.

When a value indicating the turned position of the AF frame size adjustment dial 234 is operated in the direction where the value is smaller than the current value, the CPU 230 makes the area of the AF area smaller while keeping the center position and the aspect ratio of the AF area as they are. In this manner, the AF frame 254 shown by a solid line corresponding to the current value is reduced to the AF frame 254B shown by a dotted line in the imaging range 250 shown in Fig. 13.

The turned positions of the AF frame size adjustment dial 234 are indicated by continuous values and the size (the area) of the AF area is continuously transferred according to increasing or decreasing of the value. For the size (the area) of the AF area, however, a desired size may be selected from some determined sizes instead of the continuous transfer.

As shown in Fig. 9, the abovementioned AF frame shape adjustment dial 236 is attached with a position sensor 242, which detects operation to the AF frame shape adjustment dial 236. For example, a signal of a value corresponding to a turned position, to which the AF frame shape adjustment dial 236 is set by turning operation with the reference of the predetermined turned position is outputted from the position sensor 242 and provided for the CPU 230.

The CPU 230 reads the turned position of the AF frame shape adjustment dial 236 based on the signal from the position sensor 242. Then, based on the turned position of the AF frame shape adjustment dial 236, the CPU 230 changes the shape of the AF area, i.e., the aspect ratio indicating a ratio of the vertical length and the horizontal length of the AF area in the AF processing unit 222 of the lens unit 12 or on the viewfinder 36. When the aspect ratio of the AF area is changed, the center position and the area (the size) of the AF area are kept to certain values. An aspect ratio of an AF area means a ratio of the vertical (in the direction of Y) length (V) and the horizontal (X) length (H) of a rectangular AF area. In this specification, a value of (H/V) represents the size of the aspect ratio.

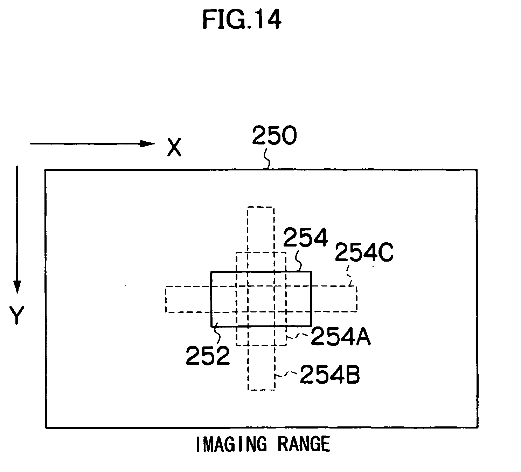

When a value indicating the turned position of the AF frame shape adjustment dial 236 is operated in the direction where the value is smaller than the current value, the CPU 230 makes the aspect ratio of the AF area smaller by making the vertical length of the AF area longer and the horizontal length shorter to keep the area of the AF area to a certain value. In this manner, the AF frame 254 shown by a solid line corresponding to the current value is changed to the AF frame 254A shown by a dotted line in the imaging range 250 shown in Fig. 14. When a value indicating the turned position of the AF frame shape adjustment dial 236 is further operated in the direction where the value is smaller, the aspect ratio is further smaller and the AF frame 254 is changed to the AF frame 254B shown by a dotted line in Fig. 14.

When a value indicating the turned position of the AF frame shape adjustment dial 236 is operated in the direction where the value is bigger than the current value, the CPU 230 makes the aspect ratio of the AF area bigger by making the vertical length of the AF area shorter and the horizontal length longer to keep the area of the AF area to a certain value. In this manner, the AF frame 254 shown by a solid line corresponding to the current value is changed to the AF frame 254C shown by a dotted line in the imaging range 250 shown in Fig. 14.

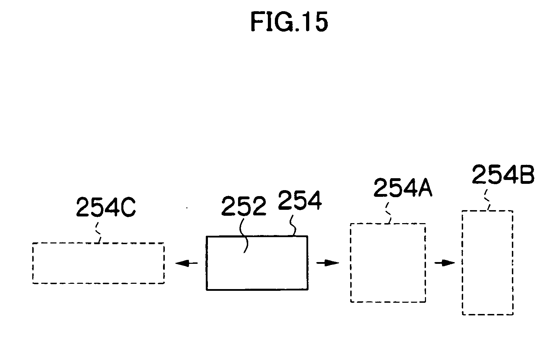

Fig. 15 shows how the aspect ratio of the AF area 252 (AF frame 254) shown in Fig. 14 is transferred. When a value of the AF frame shape adjustment dial 236 is operated in the direction where the value is smaller, the aspect ratio of the AF frame 254 shown by a solid line corresponding to the current value of the AF frame shape adjustment dial 236 become smaller as those of the AF frames 254A and 254B shown by dotted lines. When the value of the AF frame shape adjustment dial 236 is operated in the direction where the value is bigger, the aspect ratio of the AF frame 254 become bigger as AF frame 254C shown by a dotted line.

The aspect ratio of the AF area is continuously transferred according to continuous increasing or decreasing of the value of the AF frame shape adjustment dial 236. For the aspect ratio of the AF area, a desired aspect ratio may be selected from some determined aspect ratios instead of the continuous transfer.

When an aspect ratio of the AF area is changed by operation to the AF frame shape adjustment dial 236, while the center position of the AF area is not changed as described above, a part of range of the AF area may stick out from the imaging range. In such a case, the range of the AF area sticking out from the imaging range may be made invalid AF area (not considered as an object range of AF), or the position of the AF area may be changed so that the entire AF area is contained in the imaging range.

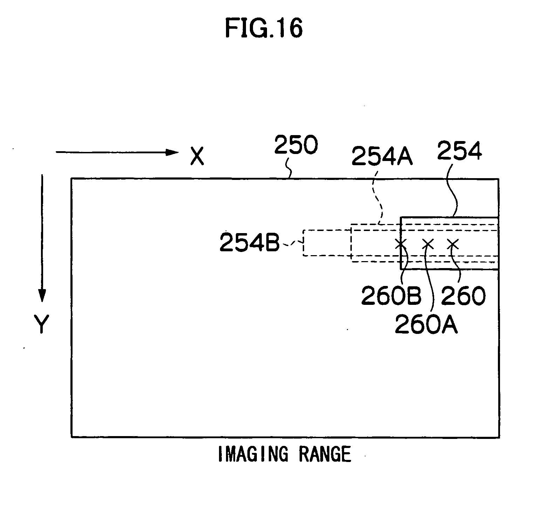

The latter case will be described. When an edge of the AF area (AF frame) overlaps an edge of the frame of the imaging range and the aspect ratio is changed, which causes the edge of the AF frame to expand from the imaging range, the changing of the aspect ratio is performed by moving the position of the AF area so that the edge position of the AF frame is fixed. In this manner, the entire AF area can be contained in the imaging range. According to this case, the right edge of the current AF frame 254 shown by a solid line overlaps the right edge of the imaging range 250 as shown in Fig. 16, for example. When the aspect ratio of the AF area is made bigger by the AF frame shape adjustment dial 236 to change it to the AF area with the aspect ratio of the AF frame 254A shown by a dotted line in Fig. 16, the center position of the AF area moves from the center position 60 of the AF frame 254 to the center position 60A of the AF frame 254A so that the right edge position of the AF frame 254A overlaps the right edge position of the imaging range 250. When the aspect ratio of the AF area is further made bigger to change it to the AF area with the aspect ratio of the AF frame 254B shown by a dotted line in Fig. 16, the center position of the AF area moves from the center position 60A of the AF frame 254A to the center position 60B of the AF frame 254B so that the right edge position of the AF frame 254B overlaps the right edge position of the imaging range 250. In this manner, the position of an AF area is changed so that the entire AF area is always contained in an imaging range.

In the embodiment, the shape (aspect ratio) of the AF area is changed, while the area of the AF area is kept to a certain value by operation to the AF frame shape adjustment dial 236, however, the area is not necessarily kept to a certain value. For example, the aspect ratio of the AF area can be changed by changing either the vertical length or the horizontal length of the AF area according to operation to the AF frame shape adjustment dial 236. Alternatively, with two adjustment dials for changing the vertical length and the horizontal length of the AF area respectively, the aspect ratio of the AF area can be changed by changing a length in a desired direction in the AF area. If the invention is adapted to change the vertical length and the horizontal length of the AF area separately, the size (the area) of the AF area can be adjusted according to adjustment of both lengths. In such a case, a device for changing the size (the area) of the AF area such as the AF frame size adjustment dial 234 is not needed in particular.

In the abovementioned embodiment, the AF area is assumed as rectangular; however, the present invention can be applied where the AF area is not rectangular. For example, the present invention can be applied to an AF area even in the shape other than a rectangle (such as a circle), where the aspect ratio of the AF area in the shape is considered to indicate a ratio of the maximum vertical length and the maximum horizontal length.

The abovementioned embodiment is described by the example where a joy stick 232 is used as a directional member for indicating the position of the AF area, however, the directional member is not limited to the joy stick and may be applied to any operating member if only it can indicate a direction such as a trackball, a cross key, or four switch members arranged in places indicating up, down, left and right. The operational member for indicating the size (area) or the shape (aspect ratio) of the AF area is not limited to a dial and may be applied to other operational members with the other styles.

The present invention can be applied to AF of a scheme other than the contrast scheme as in the abovementioned embodiment.

## Claims

1. An auto-focus system comprising:
an auto-focus device for controlling a focus of a taking lens by making an object in a range of an AF area (92) in an imaging range of a camera (10) an auto-focus object and automatically focusing on the object in the range of the AF area (92);
a size/shape adjustment operating member (64) used for changing both the size and the shape of the AF area (92);
a selection device (66) for selecting a subject from the size and the shape of the AF area (92) by operating the size/shape adjustment operating member (64); and
an AF area (92) changing device for changing the subject selected by the selection device (66) based on the operation to the size/shape adjustment operating member (64),
**characterized in that**
when the subject selected by the selection device (66) is switched, the AF area (92) changing device does not change the size and shape of the AF area (92) from the size and shape before switching, and
the AF area (92) changing device detects a deviation of a position of the size/shape adjustment operating member (64) from a reference position, which is the position of the size/shape adjustment operating member (64) adjusted when the selection device (66) is switched, and changes the size or the shape of the AF area (92) by the deviation.

2. The auto-focus system according to claim 1, **characterized in that** the size/shape adjustment operating member (64) can be set to continuous operating positions and the AF area changing device transfers the subject selected by the selection device (66) in a continuous state when an operating position of the size/shape adjustment operating member (64) is continuously changed.

3. The auto-focus system according to claim 1 or 2, further comprising a position adjustment operating member (62) for changing a position of the AF area (92), **characterized in that** the AF area changing device changes a position of the AF area (92) based on operation to the position adjustment operating member (62).

4. The auto-focus system according to claim 1, 2 or 3, **characterized in that** the size/shape adjustment operating member (64) is provided on a controller with an operating member for operating a focus or a zoom of the camera (10) or on a driving unit (108) set on the side of a lens barrel (100) of a taking lens.

5. The auto-focus system according to Claim 1 to 4, further comprising:
an aspect ratio inputting device for indicating and inputting an aspect ratio of the AF area (92); and
an aspect ratio changing device for changing an aspect ratio of the AF area (92) to the aspect ratio inputted by the aspect ratio operating device.

6. The auto-focus system according to claim 5, **characterized in that** the aspect ratio changing device changes an aspect ratio of the AF area (92) while keeping the area of the AF area (92) to a certain value by changing the vertical length and the horizontal length of the AF area (92).

7. The auto-focus system according to claim 5, **characterized in that** the aspect ratio changing device changes an aspect ratio of the AF area (92) by changing either the vertical length or the horizontal length of the AF area (92).

8. The auto-focus system according to claim 5, wherein the aspect ratio inputting device comprises:
a first inputting device for indicating and inputting an aspect ratio of the AF area (92) when only the vertical length is changed while the horizontal length of the AF area (92) being kept to a certain value; and
a second inputting device for indicating and inputting an aspect ratio of the AF area (92) when only the horizontal length is changed while the vertical length of the AF area (92) being kept to a certain value, and
**characterized in that** the aspect ratio changing device changes the vertical length of the AF area (92) to the aspect ratio indicated and inputted by the first inputting device and changes the horizontal length of the AF area (92) to the aspect ratio indicated and inputted by the second inputting device.

9. The auto-focus system according to any claim of claims 1 to 4, **characterized in that** the aspect ratio changing device changes an aspect ratio of the AF area (92) without changing the center position of the AF area (92).

10. The auto-focus system according to any one of claims 5 to 9, **characterized in that** the aspect ratio changing device changes an aspect ratio of the AF area (92) without changing the center position of the AF area (92), if an entire range of the AF area (92) is contained in the imaging range of the camera (10), and changes an aspect ratio of the AF area (92) by changing the center position of the AF area (92) so that the entire range of the AF area (92) is contained in the imaging range of the camera (10), if the entire range of the AF area (92) is not contained in the imaging range of the camera (10) .

11. The auto-focus system according to any one of claims 5 to 10, further **characterized by** comprising:
a size inputting device for indicating and inputting the size of the AF area (92); and
a size changing device (64) for changing the size of the AF area (92) to the size inputted by the size inputting device while keeping the aspect ratio of the AF area (92) as it is.

12. The auto-focus system according to any one of claims 5 to 11, further **characterized by** comprising:
a position inputting device (62) for indicating and inputting a position of the AF area (92); and
a position changing device for changing a position of the AF area (92) to the position inputted by the position inputting device.

## Patentansprüche

1. Selbstfokussierendes System mit:
einer selbstfokussierenden Vorrichtung zum Steuern des Brennpunkts einer Aufnahmelinse, indem ein Objekt in einem Bereich einer AF-Fläche (92) in einem Abbildungsbereich einer Kamera (10) zu einem Selbstfokussierungsobjekt gemacht wird und auf das Objekt im Bereich der AF-Fläche (92) automatisch fokussiert wird;
einem Größen/Form-Einstellbedienungselement (64), das zum Ändern sowohl der Größe als auch der Form der AF-Fläche (92) verwendet wird;
einer Auswahlvorrichtung (66) zum Auswählen eines Subjekts aus der Größe und der Form der AF-Fläche (92) durch Bedienen des Größen/Form-Einstellbedienungselements (64); und
einer AF-Flächen-(92) Änderungsvorrichtung zum Ändern des durch die Auswahlvorrichtung (66) ausgewählten Subjekts auf der Basis der Bedienung des Größen/Form-Einstellbedienungselements (64),
**dadurch gekennzeichnet, dass**
wenn das durch die Auswahlvorrichtung (66) ausgewählte Subjekt umgeschaltet wird, die AF-Flächen- (92) Änderungsvorrichtung die Größe und Form der AF-Fläche (92) von der Größe und Form vor dem Umschalten nicht ändert, und
die AF-Flächen- (92) Änderungsvorrichtung eine Abweichung einer Position des Größen/Form-Einstellbedienungselements (64) von einer Bezugsposition erfasst, die die Position des Größen/Form-Einstellbedienungselements (64) ist, die eingestellt ist, wenn die Auswahlvorrichtung (66) umgeschaltet wird, und die Größe oder die Form der AF-Fläche (92) um die Abweichung ändert.

2. Selbstfokussierendes System nach Anspruch 1, **dadurch gekennzeichnet, dass** das Größen/Form-Einstellbedienungselement (64) in kontinuierliche Bedienungspositionen gesetzt werden kann und die AF-Flächen-Änderungsvorrichtung das durch die Auswahlvorrichtung (66) ausgewählte Subjekt in einem kontinuierlichen Zustand überführt, wenn eine Bedienungsposition des Größen/Form-Einstellbedienungselements (64) kontinuierlich geändert wird.

3. Selbstfokussierendes System nach Anspruch 1 oder 2, welches ferner ein Positionseinstellbedienungselement (62) zum Ändern einer Position der AF-Fläche (92) umfasst, **dadurch gekennzeichnet, dass** die AF-Flächen-Änderungsvorrichtung eine Position der AF-Fläche (92) auf der Basis der Bedienung des Positionseinstellbedienungselements (62) ändert.

4. Selbstfokussierendes System nach Anspruch 1, 2 oder 3, **dadurch gekennzeichnet, dass** das Größen/Form-Einstellbedienungselement (64) an einer Steuereinheit mit einem Bedienungselement zum Handhaben eines Brennpunkts oder eines Zooms der Kamera (10) oder an einer Antriebseinheit (108), die auf der Seite eines Linsenzylinders (100) einer Aufnahmelinse eingerichtet ist, vorgesehen ist.

5. Selbstfokussierendes System nach Anspruch 1 bis 4, welches ferner umfasst:
eine Seitenverhältnis-Eingabevorrichtung zum Angeben und Eingeben eines Seitenverhältnisses der AF-Fläche (92); und
eine Seitenverhältnis-Änderungsvorrichtung zum Ändern eines Seitenverhältnisses der AF-Fläche (92) auf das durch die Seitenverhältnis-Bedienungsvorrichtung eingegebene Seitenverhältnis.

6. Selbstfokussierendes System nach Anspruch 5, **dadurch gekennzeichnet, dass** die Seitenverhältnis-Änderungsvorrichtung ein Seitenverhältnis der AF-Fläche (92) unter Halten des Flächeninhalts der AF-Fläche (92) auf einem bestimmten Wert durch Ändern der vertikalen Länge und der horizontalen Länge der AF-Fläche (92) ändert.

7. Selbstfokussierendes System nach Anspruch 5, **dadurch gekennzeichnet, dass** die Seitenverhältnis-Änderungsvorrichtung ein Seitenverhältnis der AF-Fläche (92) durch Ändern entweder der vertikalen Länge oder der horizontalen Länge der AF-Fläche (92) ändert.

8. Selbstfokussierendes System nach Anspruch 5, wobei die Seitenverhältnis-Eingabevorrichtung umfasst:
eine erste Eingabevorrichtung zum Angeben und Eingeben eines Seitenverhältnisses der AF-Fläche (92), wenn nur die vertikale Länge geändert wird, während die horizontale Länge der AF-Fläche (92) auf einem bestimmten Wert gehalten wird; und
eine zweite Eingabevorrichtung zum Angeben und Eingeben eines Seitenverhältnisses der AF-Fläche (92), wenn nur die horizontale Länge geändert wird, während die vertikale Länge der AF-Fläche (92) auf einem bestimmten Wert gehalten wird, und
**dadurch gekennzeichnet, dass** die Seitenverhältnis-Änderungsvorrichtung die vertikale Länge der AF-Fläche (92) auf das durch die erste Eingabevorrichtung angegebene und eingegebene Seitenverhältnis ändert und die horizontale Länge der AF-Fläche (92) auf das durch die zweite Eingabevorrichtung angegebene und eingegebene Seitenverhältnis ändert.

9. Selbstfokussierendes System nach einem der Ansprüche 1 bis 4, **dadurch gekennzeichnet, dass** die Seitenverhältnis-Änderungsvorrichtung ein Seitenverhältnis der AF-Fläche (92) ändert, ohne die Mittenposition der AF-Fläche (92) zu ändern.

10. Selbstfokussierendes System nach einem der Ansprüche 5 bis 9, **dadurch gekennzeichnet, dass** die Seitenverhältnis-Änderungsvorrichtung ein Seitenverhältnis der AF-Fläche (92) ändert, ohne die Mittenposition der AF-Fläche (92) zu ändern, wenn ein ganzer Bereich der AF-Fläche (92) im Abbildungsbereich der Kamera (10) enthalten ist, und ein Seitenverhältnis der AF-Fläche (92) durch Ändern der Mittenposition der AF-Fläche (92) ändert, so dass der ganze Bereich der AF-Fläche (92) im Abbildungsbereich der Kamera (10) enthalten ist, wenn der ganze Bereich der AF-Fläche (92) nicht im Abbildungsbereich der Kamera (10) enthalten ist.

11. Selbstfokussierendes System nach einem der Ansprüche 5 bis 10, welches ferner **dadurch gekennzeichnet ist, dass** es umfasst:
eine Größeneingabevorrichtung zum Angeben und Eingeben der Größe der AF-Fläche (92); und
eine Größenänderungsvorrichtung (64) zum Ändern der Größe der AF-Fläche (92) auf die durch die Größeneingabevorrichtung eingegebene Größe, während das Seitenverhältnis der AF-Fläche (92) wie es ist beibehalten wird.

12. Selbstfokussierendes System nach einem der Ansprüche 5 bis 11, welches ferner **dadurch gekennzeichnet ist, dass** es umfasst:
eine Positionseingabevorrichtung (62) zum Angeben und Eingeben einer Position der AF-Fläche (92); und
eine Positionsänderungsvorrichtung zum Ändern einer Position der AF-Fläche (92) auf die durch die Positionseingabevorrichtung eingegebene Position.

## Revendications

1. Système de mise au point automatique comprenant :
un dispositif de mise au point automatique destiné à commander la mise au point d'un objectif de prise de vues en faisant d'un objet dans une plage d'une zone de mise au point automatique (92) dans un domaine de formation d'image d'un appareil de prise de vues (10) un objet de mise au point automatique et en mettant automatiquement au point sur l'objet dans la plage de la zone de mise au point automatique (92),
un élément de mise en oeuvre de réglage de taille/de forme (64) utilisé pour changer à la fois la taille et la forme de la zone de mise au point automatique (92),
un dispositif de sélection (66) destiné à sélectionner un sujet à partir de la taille et de la forme de la zone de mise au point automatique (92) en actionnant l'élément de mise en oeuvre de réglage de taille/de forme (64), et
un dispositif de changement de zone de mise au point automatique (92) destiné à changer le sujet sélectionné par le dispositif de sélection (66) sur la base de l'actionnement de l'élément de mise en oeuvre de réglage de taille/de forme (64),
**caractérisé en ce que**
lorsque le sujet sélectionné par le dispositif de sélection (66) est changé, le dispositif de changement de zone de mise au point automatique (92) ne change ni la taille, ni la forme de la zone de mise au point automatique (92) par rapport à la taille et la forme avant le changement, et
le dispositif de changement de zone de mise au point automatique (92) détecte un écart d'une position de l'élément de mise en oeuvre de réglage de taille/de forme (64) par rapport à une position de référence, qui est la position de l'élément de mise en oeuvre de réglage de taille/de forme (64) réglée lorsque le dispositif de sélection (66) est changé, et change la taille ou la forme de la zone de mise au point automatique (92) de l'écart.

2. Système de mise au point automatique selon la revendication 1, **caractérisé en ce que** l'élément de mise en oeuvre de réglage de taille/de forme (64) peut être établi à des positions de fonctionnement en continu et **en ce que** le dispositif de changement de zone de mise au point automatique transfère le sujet sélectionné par le dispositif de sélection (66) dans un état continu lorsqu'une position d'actionnement de l'élément de mise en oeuvre de réglage de taille/de forme (64) est changée de manière continue.

3. Système de mise au point automatique selon la revendication 1 ou 2, comprenant en outre un élément de mise en oeuvre de réglage de position (62) destiné à changer une position de la zone de mise au point automatique (92), **caractérisé en ce que** le dispositif de changement de mise au point automatique change une position de la zone de mise au point automatique (92) sur la base de l'actionnement de l'élément de mise en oeuvre de réglage de position (62).

4. Système de mise au point automatique selon la revendication 1, 2 ou 3 **caractérisé en ce que** l'élément de mise en oeuvre de réglage de taille/de forme (64) est prévu sur un contrôleur comportant un élément d'actionnement destiné à mettre en oeuvre une mise au point ou un zoom de l'appareil de prise de vues (10) ou sur une unité d'entraînement (108) disposée sur un barillet d'objectif (100) de l'objectif de prise de vues.

5. Système de mise au point automatique selon les revendications 1 à 4, comprenant en outre :
un dispositif d'entrée de format d'image destiné à indiquer et appliquer en entrée un format d'image de la zone de mise au point automatique (92), et
un dispositif de modification de format d'image destiné à modifier le format d'image de la zone de mise au point automatique (92) au format d'image appliqué en entrée par le dispositif d'actionnement de format d'image.

6. Système de mise au point automatique selon la revendication 5, **caractérisé en ce que** le dispositif de modification de format d'image modifie le format d'image de la zone de mise au point automatique (92) tout en conservant la surface de la zone de mise au point automatique (92) à une certaine valeur en modifiant la longueur verticale et la longueur horizontale de la zone de mise au point automatique (92).

7. Système de mise au point automatique selon la revendication 5, **caractérisé en ce que** le dispositif de modification de format d'image modifie le format d'image de la zone de mise au point automatique (92) en modifiant soit la longueur verticale, soit la longueur horizontale de la zone de mise au point automatique (92).

8. Système de mise au point automatique selon la revendication 5, dans lequel le dispositif d'entrée de format d'image comprend :
un premier dispositif d'entrée destiné à indiquer et appliquer en entrée un format d'image de la zone de mise au point automatique (92) lorsque seule la longueur verticale est modifiée alors que la longueur horizontale de la zone de mise au point automatique (92) est maintenue à une certaine valeur, et
un second dispositif d'entrée destiné à indiquer et appliquer en entrée un format d'image de la zone de mise au point automatique (92) lorsque seule la longueur horizontale est modifiée alors que la longueur verticale de la zone de mise au point automatique (92) est maintenue à une certaine valeur, et
**caractérisé en ce que** le dispositif de modification de format d'image modifie la longueur verticale de la zone de mise au point automatique (92) au format d'image indiqué et appliqué en entrée par le premier dispositif d'entrée et modifie la longueur horizontale de la zone de mise au point automatique (92) au format d'image indiqué et appliqué en entrée par le second dispositif d'entrée.

9. Système de mise au point automatique selon l'une quelconque des revendications 1 à 4, **caractérisé en ce que** le dispositif de modification de format d'image modifie le format d'image de la zone de mise au point automatique (92) sans modifier la position centrale de la zone de mise au point automatique (92).

10. Système de mise au point automatique selon l'une quelconque des revendications 5 à 9, **caractérisé en ce que** le dispositif de modification de format d'image modifie le format d'image de la zone de mise au point automatique (92) sans modifier la position centrale de la zone de mise au point automatique (92), si une plage entière de la zone de mise au point automatique (92) est contenue dans le domaine de formation d'image de l'appareil de prise de vues (10), et modifie le format d'image de la zone de mise au point automatique (92), en modifiant la position centrale de la zone de mise au point automatique (92) de sorte la plage entière de la zone de mise au point automatique (92) soit contenue dans le domaine de formation d'image de l'appareil de prise de vues (10), si la plage entière de la zone de mise au point automatique (92) n'est pas contenue dans le domaine de formation d'image de l'appareil de prise de vues (10).

11. Système de mise au point automatique selon l'une quelconque des revendications 5 à 10, **caractérisé en outre par** le fait de comprendre :
un dispositif d'entrée de taille destiné à indiquer et appliquer en entrée la taille de la zone de mise au point automatique (92), et
un dispositif de changement de taille (64) destiné à changer la taille de la zone de mise au point automatique (92) à la taille appliquée en entrée par le dispositif d'entrée de taille tout en conservant le format d'image de la zone de mise au point automatique (92) tel qu'il est.

12. Système de mise au point automatique selon les revendications 5 à 11, **caractérisé en outre par** le fait de comprendre :
un dispositif d'entrée de position (62) destiné à indiquer et à appliquer en entrée une position de la zone de mise au point automatique (92), et
un dispositif de modification de position destiné à modifier une position dans la zone de mise au point automatique (92) à la position appliquée en entrée par le dispositif d'entrée de position.
